# EUROPEAN PATENT APPLICATION

(11) **EP 4 535 853 A1**
(43) Date of publication of application: **09.04.2025**
(21) Application number: 23811090.2
(22) Date of filing: 24.05.2023
(51) Int. Cl.: H04W 24/08

(54) **INFORMATION PROCESSING METHOD AND APPARATUS, AND READABLE STORAGE MEDIUM**

(30) Priority: 25.05.2022 CN 202210579102
(71) Applicant: Datang Mobile Communications Equipment Co., Ltd., Beijing 100085 (CN)
(72) Inventor: QUAN, Haiyang, Beijing 100085 (CN); LI, Jianxiang, Beijing 100085 (CN); TIAN, Xiaoyang, Beijing 100085 (CN); ZHANG, Bufang, Beijing 100085 (CN); JIA, Yinan, Beijing 100085 (CN)
(74) Representative: dompatent von Kreisler Selting Werner - Partnerschaft von Patent- und Rechtsanwälten mbB
(86) International application number: PCT/CN2023/096003
(87) International publication number: WO 2023/227020

(57) **Abstract**

An information processing method, an information processing device, and a readable storage medium are provided in the present disclosure, which relates to the field of communication technologies, to ensure credibility of positioning results in an NR system. The method includes: reporting, by a user equipment, first information to an LMF, where the first information is used to indicate a positioning integrity monitoring capability of the user equipment; and receiving, by the user equipment, second information transmitted by the LMF, where the second information is transmitted by the LMF in response to the first information and is used to indicate configuration information for positioning integrity monitoring.

## Description

### CROSS-REFERENCE TO RELATED APPLICATION

This application claims a priority to Chinese Patent Application No. 202210579102.8 filed on May 25, 2022, which is incorporated in its entirety by reference herein.

### TECHNICAL FIELD

The present disclosure relates to the field of communication technologies, and in particular to an information processing method, an information processing device and a readable storage medium.

### BACKGROUND

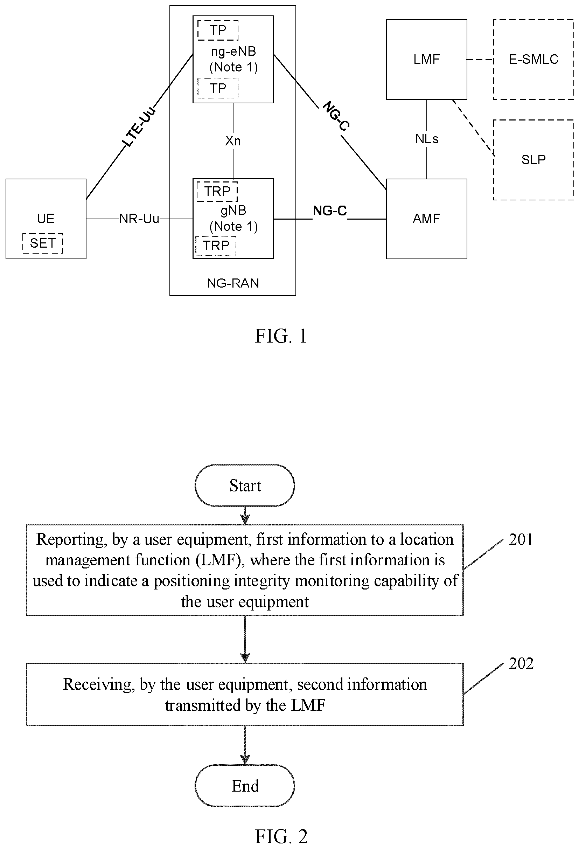

Reference is made to FIG. 1, which is a schematic diagram of a positioning architecture for the next generation-radio access network (Next Generation-Radio Access Network, NG-RAN).

A location management function (Location Management Function, LMF) is mainly configured to select a positioning method, trigger a corresponding positioning measurement, and determine a final result and accuracy of the positioning. The LMF may interact with multiple NG-RAN nodes, to provide assistance data information for broadcast. The LMF may also optionally segment and/or encrypt the assistance data information for broadcast. The LMF interacts with an access and mobility management function (Access and Mobility Management Function, AMF), to provide encryption key data information to the AMF.

An NG-RAN is configured to transmit a positioning reference signal or perform a positioning measurement based on assistance information.

A user equipment (User Equipment, UE) is configured to transmit a positioning reference signal, or perform a positioning measurement based on assistance information, and may also calculate a final result and accuracy of the positioning based on a measurement result.

A next generation eNode B (next generation eNode B, ng-eNB) is configured to broadcast, in a positioning system information message, the assistance data information received from the LMF.

The NR node (gNB) is used to broadcast, in a positioning system information message, the assistance data information received from the LMF, and may measure an uplink signal.

Position integrity is a measure of a degree of confidence in accuracy of location-related data provided by a positioning system and a capability to provide timely and effective alerts when the positioning system does not meet expected operating conditions. However, for a new radio (New Radio, NR) system, there is currently no clear mechanism for monitoring positioning integrity, which results in lack of credibility in positioning results.

### SUMMARY

The embodiments of the present disclosure provide an information processing method, an information processing device, and a readable storage medium to ensure credibility of positioning results in an NR system.

In a first aspect, embodiments of the present disclosure provide an information processing method, including:
reporting, by a user equipment, first information to an LMF, where the first information is used to indicate a positioning integrity monitoring capability of the user equipment; and
receiving, by the user equipment, second information transmitted by the LMF, where the second information is transmitted by the LMF in response to the first information and is used to indicate configuration information for positioning integrity monitoring.

Optionally, the positioning integrity monitoring capability includes one or more of the following information:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

Optionally, the capability to monitor the downlink signal error includes one or more of the following information:
whether a capability to monitor a reception (receive, Rx) timing error is possessed;
whether a capability to monitor an Rx timing error group is possessed;
the maximum quantity of Rx timing error groups supported to be monitored;
a supported error resolution; or,
whether a capability to monitor a non-line of sight (Non-Light Of Sight, NLOS) path is supported.

Optionally, the capability to monitor the performance of the downlink signal error includes one or more of the following information:
monitoring an uncertainty range of the downlink signal error; or
an effective time interval for monitoring the downlink signal error.

Optionally, the capability to monitor the error caused by the signal transmitted within the user equipment includes one or more of the following information:
whether a capability to monitor a transmission (transmit, Tx) timing error is possessed;
whether a capability to monitor a Tx timing error group is possessed;
the maximum quantity of Tx timing error groups supported to be monitored;
a supported error resolution; or,
whether a capability to monitor an error in transmitting a sounding reference signal (Sounding Reference Signal, SRS) is possessed.

Optionally, the capability to monitor the performance of the error caused by the signal transmitted within the user equipment includes one or more of the following information:
monitoring an uncertainty range of the error caused by the signal transmitted within the user equipment; or,
an effective time interval for monitoring the error caused by the signal transmitted within the user equipment.

Optionally, the capability concerning the supported manner for reporting the integrity related information includes one or more of the following information:
whether periodic reporting is supported;
whether event-triggered reporting is supported; or,
whether on-demand reporting is supported.

Optionally, the method further includes:
performing, by the user equipment, the positioning integrity monitoring based on the second information.

In a second aspect, embodiments of the present disclosure provide an information processing method, including:
receiving, by a location management function (LMF), first information reported by a user equipment, where the first information is used to indicate a positioning integrity monitoring capability of the user equipment; and
transmitting, by the LMF, second information to the user equipment in response to the first information, where the second information is used to indicate configuration information for positioning integrity monitoring.

Optionally, before the receiving, by the LMF, the first information reported by the user equipment, the method further includes:
transmitting, by the LMF, a first request to the user equipment;
the receiving, by the LMF, the first information reported by the user equipment includes:
receiving, by the LMF, the first information reported by the user equipment in response to the first request.

Optionally, the positioning integrity monitoring capability includes one or more of the following information:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

Optionally, the capability to monitor the downlink signal error includes one or more of the following information:
whether a capability to monitor a reception (Rx) timing error is possessed;
whether a capability to monitor an Rx timing error group is possessed;
the maximum quantity of Rx timing error groups supported to be monitored;
a supported error resolution; or,
whether a capability to monitor a non-line of sight (NLOS) path is supported.

Optionally, the capability to monitor the performance of the downlink signal error includes one or more of the following information:
monitoring an uncertainty range of the downlink signal error; or,
an effective time interval for monitoring the downlink signal error.

Optionally, the capability to monitor the error caused by the signal transmitted within the user equipment includes one or more of the following information:
whether a capability to monitor a transmission (Tx) timing error is possessed;
whether a capability to monitor a Tx timing error group is possessed;
the maximum quantity of Tx timing error groups supported to be monitored;
a supported error resolution; or,
whether a capability to monitor an error in transmitting a sounding reference signal (SRS) is possessed.

Optionally, the capability to monitor the performance of the error caused by the signal transmitted within the user equipment includes one or more of the following information:
monitoring an uncertainty range of the error caused by the signal transmitted within the user equipment; or,
an effective time interval for monitoring the error caused by the signal transmitted within the user equipment.

Optionally, the capability concerning the supported manner for reporting the integrity related information includes one or more of the following information:
whether periodic reporting is supported;
whether event-triggered reporting is supported; or,
whether on-demand reporting is supported.

In a third aspect, embodiments of the present disclosure provide an information processing device, applied to a user equipment, including: a memory, a transceiver, and a processor;
the memory is configured to store a computer program, the transceiver is configured to transmit and receive data under control of the processor, and the processor is configured to read the computer program in the memory to perform following operations:
reporting first information to a location management function (LMF), where the first information is used to indicate a positioning integrity monitoring capability of the user equipment; and
receiving second information transmitted by the LMF, where the second information is transmitted by the LMF in response to the first information and is used to indicate configuration information for positioning integrity monitoring.

Optionally, the positioning integrity monitoring capability includes one or more of the following information:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

Optionally, the processor is further configured to read the computer program in the memory to perform following operation:
performing the positioning integrity monitoring based on the second information.

In a fourth aspect, embodiments of the present disclosure provide an information processing device, applied to an LMF, including: a memory, a transceiver, and a processor;
the memory is configured to store a computer program, the transceiver is configured to transmit and receive data under control of the processor, and the processor is configured to read the computer program in the memory to perform following operations:
receiving first information reported by a user equipment, where the first information is used to indicate a positioning integrity of the user equipment; and
transmitting second information to the user equipment in response to the first information, where the second information is used to indicate configuration information for positioning integrity monitoring.

Optionally, the positioning integrity monitoring capability includes one or more of the following information:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

Optionally, the processor is further configured to read the computer program in the memory to perform following operations:
transmitting a first request to the user equipment; and
receiving the first information reported by the user equipment in response to the first request.

In a fifth aspect, embodiments of the present disclosure provide an information processing device, applied to a user equipment, including:
a first transmission unit, configured to report first information to a location management function (LMF), where the first information is used to indicate a positioning integrity monitoring capability of the user equipment; and
a first reception unit, configured to receive second information transmitted by the LMF, where the second information is transmitted by the LMF in response to the first information and is used to indicate configuration information for positioning integrity monitoring.

In a sixth aspect, embodiments of the present disclosure provide an information processing device, applied to an LMF, including:
a first reception unit, configured to receive first information reported by a user equipment, where the first information is used to indicate a positioning integrity monitoring capability of the user equipment; and
a first transmission unit, configured to transmit second information to the user equipment in response to the first information, where the second information is used to indicate configuration information for positioning integrity monitoring.

In a seventh aspect, embodiments of the present disclosure further provide a processor readable storage medium, on which a computer program is stored, and when the computer program is executed by a processor, the steps in the information processing method described above are implemented.

In the embodiments of the present disclosure, the user equipment may report the first information to the LMF to indicate the positioning integrity monitoring capability of the user equipment, and then the LMF may transmit the second information to the user equipment based on this information to indicate the configuration information for the positioning integrity monitoring. As a result, based on the solutions of the embodiments of the present disclosure, LMF can learn about positioning integrity monitoring capabilities of user equipments, select appropriate user equipments and transmit second information to them. In this way, the LMF can determine credibility of information reported by the user equipments or ensure accuracy of location calculation results. Therefore, based on the solutions of the embodiments of the present disclosure, credibility of positioning results in the NR system is ensured.

### BRIEF DESCRIPTION OF THE DRAWINGS

FIG. 1 is a schematic diagram of a positioning architecture for an NG-RAN in the related technologies;
FIG. 2 is a first flow chart of an information processing method according to embodiments of the present disclosure;
FIG. 3 is a second flow chart of an information processing method according to embodiments of the present disclosure;
FIG. 4 is a first structural diagram of an information processing device according to embodiments of the present disclosure;
FIG. 5 is a second structural diagram of an information processing device according to embodiments of the present disclosure;
FIG. 6 is a third structural diagram of an information processing device according to embodiments of the present disclosure; and
FIG. 7 is a fourth structural diagram of an information processing device according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

The embodiments of the present disclosure provide an information processing method and an information processing device, to ensure credibility of positioning results of the NR system.

The method and the device are based on the same application concept. Since the principles of solving problems in the method and the device are similar, reference may be made to each other for implementations of the device and the method, the repetition of which is not further provided herein.

In the embodiments of the present disclosure, an LMF selects, based on positioning integrity monitoring capabilities provided by user equipments, appropriate user equipments and provides them with configuration information for positioning integrity monitoring, so that these user equipments can perform positioning integrity monitoring. In addition, the LMF can also generate integrity parameters or save integrity parameters reported by the user equipments, to further optimize positioning integrity mechanism of the NR. The implementation process of the embodiments of the present disclosure is described hereinafter in conjunction with the embodiments.

Reference is made FIG. 2, and FIG. 2 is a flow chart of an information processing method according to embodiments of the present disclosure. As shown in FIG. 2, the method includes the following steps.

Step 201: reporting, by a user equipment, first information to an LMF, where the first information is used to indicate a positioning integrity monitoring capability of the user equipment.

Step 202: receiving, by the user equipment, second information transmitted by the LMF, where the second information is transmitted by the LMF in response to the first information and is used to indicate configuration information for positioning integrity monitoring.

In the embodiments of the present disclosure, the user equipment and the LMF interact with each other through LTE positioning protocol (LTE Positioning Protocol, LPP) signaling. For example, the user equipment reports the first information to the LMF through LPP signaling, and the user equipment receives the second information transmitted by the LMF through LPP signaling. In the embodiments of the present disclosure, there is no limitation on the specific LPP signaling used by the user equipment and the LMF, as long as the used LPP signaling can carry the first information and the second information.

Before step 201, the method according to the embodiments of the present disclosure may further include: receiving, by the user equipment, a first request from the LMF. Then, step 201 may correspondingly include: in response to the first request, reporting by the user equipment the first information to the LMF. Likewise, the first request may be implemented through any LPP signaling.

In the embodiments of the present disclosure, the positioning integrity monitoring capability includes one or more of the following information:
(1) a capability to monitor a downlink signal error;
(2) a capability to monitor a performance of a downlink signal error;
(3) a capability to monitor an error caused by a signal transmitted within the user equipment;
(4) a capability to monitor a performance of an error caused by a signal transmitted within the user equipment;
(5) a capability concerning a supported manner for reporting integrity related information; or,
(6) capability information indicating whether UE-based and/or UE-assisted integrity monitoring mechanism is supported.

In the embodiments of the present disclosure, the user equipment may report different capabilities for different positioning methods, or may report same capabilities for different positioning methods, or may report different capabilities for different operating frequency bands.

The capability to monitor the downlink signal error includes one or more of the following information:
whether a capability to monitor a reception (Rx) timing error is possessed;
whether a capability to monitor an Rx timing error group is possessed;
the maximum quantity of Rx timing error groups supported to be monitored;
a supported error resolution; or,
whether a capability to monitor an NLOS path is supported.

The capability to monitor the performance of the downlink signal error includes one or more of the following information:
monitoring an uncertainty range of the downlink signal error; or,
an effective time interval for monitoring the downlink signal error.

The capability to monitor the error caused by the signal transmitted within the user equipment includes one or more of the following information:
whether a capability to monitor a Tx timing error is possessed;
whether a capability to monitor a Tx timing error group is possessed;
the maximum quantity of Tx timing error groups supported to be monitored;
a supported error resolution; or,
whether a capability to monitor an error in transmitting an SRS is possessed.

The capability to monitor the performance of the error caused by the signal transmitted within the user equipment includes one or more of the following information:
monitoring an uncertainty range of the error caused by the signal transmitted within the user equipment; or,
an effective time interval for monitoring the error caused by the signal transmitted within the user equipment.

The capability concerning the supported manner for reporting the integrity related information includes one or more of the following:
whether periodic reporting is supported;
whether event-triggered reporting is supported; or,
whether on-demand reporting is supported.

After obtaining the second information, the user equipment may perform positioning integrity monitoring according to the second information. Further, the user equipment may also report an obtained monitoring result to the LMF.

In the embodiments of the present disclosure, the user equipment may report the first information to the LMF to indicate the positioning integrity monitoring capability of the user equipment, and then the LMF may transmit the second information to the user equipment based on this information to indicate the configuration information for the positioning integrity monitoring. As a result, based on the solutions of the embodiments of the present disclosure, LMF can learn about positioning integrity monitoring capabilities of user equipments, select appropriate user equipments and transmit second information to them. In this way, the LMF can determine credibility of information reported by the user equipments or ensure accuracy of location calculation results. Therefore, based on the solutions of the embodiments of the present disclosure, credibility of positioning results in the NR system is ensured.

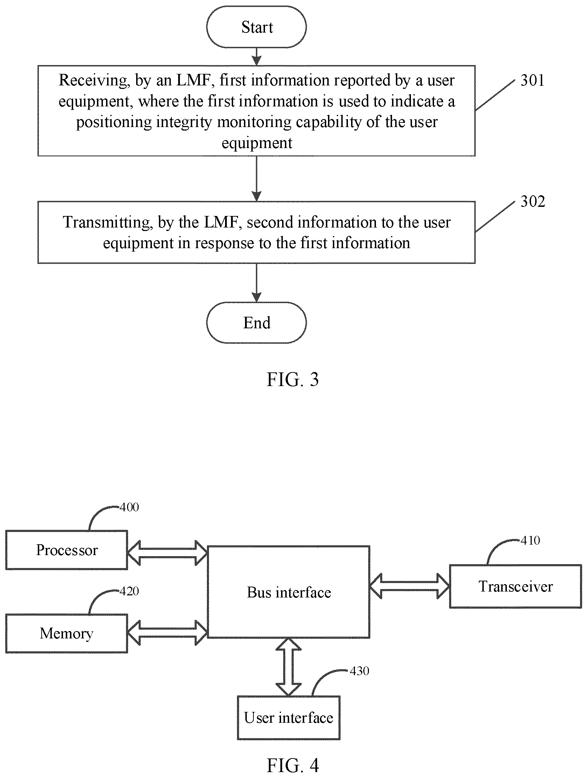

Reference is made to FIG. 3, and FIG. 3 is a flow chart of an information processing method according to embodiments of the present disclosure. As shown in FIG. 3, the method includes the following steps.

Step 301: receiving, by an LMF, first information reported by a user equipment, where the first information is used to indicate a positioning integrity monitoring capability of the user equipment.

Step 302: transmitting, by the LMF, second information to the user equipment in response to the first information, where the second information is used to indicate configuration information for positioning integrity monitoring.

In the embodiments of the present disclosure, the LMF interacts with the user equipment through LPP signaling. For example, the LMF receives the first information reported by the user equipment through LPP signaling, and the LMF transmits the second information to the user equipment through LPP signaling. In the embodiments of the present disclosure, there is no limitation on the specific LPP signaling used by the user equipment and the LMF, as long as the used LPP signaling can carry the first information and the second information. Based on the transmitted second information, the LMF can indicate the selected user equipment to perform integrity monitoring and report related errors.

When selecting a user equipment, the LMF may make a selection based on capability information of user equipments. Or, further, LMF may make a selection by considering a corresponding selection strategy. The selection strategy may be set according to actual needs. For example, if user equipments reports supported error resolutions, the LMF may, based on a requirement for integrity, select a user equipment that supports a corresponding error resolution for monitoring or give priority to a user equipment with a high error resolution for integrity monitoring. For another example, if a user equipment reports that a capability to monitor an NLOS path is supported, the LMF may select the user equipment to perform NLOS path monitoring.

Optionally, before step 301, the LMF may also transmit a first request to the user equipment. Correspondingly, in step 301, the LMF receives the first information reported by the user equipment in response to the first request. Likewise, the first request may be implemented through any LPP signaling.

For content and information included in the positioning integrity monitoring capability, reference may be made to the description of the above method embodiments.

In the embodiments of the present disclosure, the user equipment may report the first information to the LMF to indicate the positioning integrity monitoring capability of the user equipment, and then the LMF may transmit the second information to the user equipment based on this information to indicate the configuration information for the positioning integrity monitoring. As a result, based on the solutions of the embodiments of the present disclosure, LMF can learn about positioning integrity monitoring capabilities of user equipments, select appropriate user equipments and transmit second information to them. In this way, the LMF can determine credibility of information reported by the user equipments or ensure accuracy of location calculation results. Therefore, based on the solutions of the embodiments of the present disclosure, credibility of positioning results in the NR system is ensured.

As mentioned previously, positioning integrity is a measure of a degree of confidence in accuracy of location-related data and a capability to provide relevant alerts. If the positioning integrity function is not supported, the LMF may not be able to determine whether calculation results are credible, or the LMF may perform position calculation by using a measurement result that exceeds an error boundary, which results in inaccurate position calculation results and unreliable positioning results. In the embodiments of the present disclosure, LMF may select, based on capability information reported by user equipments, a user equipment that can provide integrity monitoring, so that credibility and dependence of the user equipment in positioning integrity can be analyzed and selected by considering the monitoring capability and the measurement capability of the user equipment, which enhances positioning credibility. The processing of the user equipment and the LMF is described hereinafter based on different content included in the positioning integrity monitoring capability reported by the user equipment.

### 1. The positioning integrity monitoring capability includes a capability of the user equipment to monitor a downlink signal error

The user equipment reports the positioning integrity monitoring capability, which includes the capability of the user equipment to the monitor downlink signal error. The capability of the user equipment to monitor the downlink signal error may include one or more of the following:
whether a capability to monitor an Rx timing error is possessed;
whether a capability to monitor an Rx timing error group is possessed;
the maximum quantity of Rx timing error groups supported to be monitored;
a supported error resolution; or,
whether a capability to monitor a non-line of sight (NLOS) path is supported.

In a case that the user equipment has the capability to monitor the Rx timing error, the LMF may require the user equipment to monitor the Rx timing error and report the error situation or information such as deviation range. The LMF uses these pieces of information to generate integrity parameters for downlink signals and provides them to other positioning user equipments for use.

In a case that the user equipment has the capability to monitor the Rx timing error group, the LMF may require the user equipment to monitor the Rx timing error group and report the error situation or information such as deviation range. The LMF uses these pieces of information to generate integrity parameters for downlink signals and provides them to other positioning user equipments for use.

In a case that the user equipment reports the maximum quantity of Rx timing error groups supported to be monitored, when the LMF determines the configuration information, the quantity of Rx timing error groups required to be monitored by the user equipment that is configured for the user equipment needs to be less than or equal to the maximum quantity.

In a case that user equipments report supported error resolutions, the LMF may, based on a requirement for integrity, select a user equipment that supports a corresponding error resolution for monitoring or give priority to a user equipment with a high error resolution for integrity monitoring.

If the user equipment reports that the capability to monitoring the NLOS path is supported, the LMF may select the user equipment to perform monitoring of the NLOS path.

### 2. The positioning integrity monitoring capability includes a capability to monitor a performance of a downlink signal error

The user equipment reports the positioning integrity monitoring capability, which includes the capability of the user equipment to monitor the performance of downlink signal error. The capability of the user equipment to monitor the downlink signal error includes one or more of the following:
monitoring an uncertainty range of the downlink signal error; or,
an effective time interval for monitoring the downlink signal error.

In a case that the user equipment has the capability to monitor the uncertainty range of the downlink signal error, for example, when timing, antennas, etc., of the user equipment have been calibrated and compensated, this uncertainty will be weaker and the performance will be better: user equipments may report capabilities regarding this to the LMF, and the LMF may select a user equipment with a better performance to monitor the downlink signal error, to improve integrity-related parameters and improve the performance of the integrity mechanism.

In a case that the user equipment reports relevant information about the effective time interval for monitoring the downlink signal error, for example, the accuracy of monitoring can be guaranteed within a certain time period and the accuracy of the monitoring result may decrease after this time period, then the LMF may select, based on information reported by user equipments, a user equipment with a long effective time for monitoring. If an effective time is shorter, it means that the monitoring quality will deteriorate quickly.

The user equipment monitors relevant monitoring quantities based on configuration of the LMF.

### 3. The positioning integrity monitoring capability includes a capability of the user equipment to monitor an error caused within the user equipment

The user equipment reports the positioning integrity monitoring capability, which includes the capability of the user equipment to monitor the error caused within the user equipment. The capability of the user equipment to monitor the error caused within the user equipment includes one or more of the following:
whether a capability to monitor a Tx timing error is possessed;
whether a capability to monitor a Tx timing error group is possessed;
the maximum quantity of Tx timing error groups supported to be monitored;
a supported error resolution; or,
whether a capability to monitor an error in transmitting an SRS is possessed.

If user equipments report that the capability to monitor the Tx timing error or monitor the Tx timing error group or monitor the error in transmitting the SRS signal is possessed, the LMF may select these user equipments to monitor the Tx timing error or the Tx timing error group or the error in transmitting the SRS signal. These user equipments report error situations caused within the user equipments or integrity parameters calculated by the user equipments. The LMF generates integrity parameters based on the error situations reported by the user equipments or saves the integrity parameters reported by the user equipments, and provides these integrity parameters to other positioning user equipments to improve the performance of positioning integrity.

In a case that the user equipment reports the maximum quantity of Tx timing error groups supported to be monitored, when the LMF determines the configuration information, the quantity of Tx timing error groups required to be monitored by the user equipment that is configured for the user equipment needs to be less than or equal to the maximum quantity.

In a case that the user equipment reports the supported error resolution, the LMF may, based on a requirement for integrity, select a user equipment that supports a corresponding error resolution for monitoring or give priority to a user equipment with a high error resolution for integrity monitoring.

### 4. The positioning integrity monitoring capability includes a capability of the user equipment to monitor a performance of an error caused by a signal transmitted within the user equipment

The user equipment reports the positioning integrity monitoring capability, which includes the capability of the user equipment to monitor the performance of the error caused by the signal transmitted within the user equipment. The capability of the user equipment to monitor the performance of error caused by the signal transmitted within the user equipment includes one or more of the following:
monitoring an uncertainty range of the error caused by the signal transmitted within the user equipment; or,
an effective time interval for monitoring the error caused by the signal transmitted within the user equipment.

In a case that user equipments report that a capability to monitor an uncertainty range of an error caused by a signal transmitted within a user equipment is possessed, for example, the time synchronization information has been calibrated and the internal clock is relatively accurate: the user equipments may report information regarding this to the LMF, and the LMF may select a user equipment with relatively high reliability for integrity monitoring.

In a case that user equipments have an effective time interval for monitoring an error generated by a signal transmitted within a user equipment, the user equipments may report it to the network side. The LMF may select an appropriate user equipments for monitoring based on the duration.

### 5. The positioning integrity monitoring capability includes a capability related to a manner supported by the user equipment for reporting integrity related information

The user equipment reports the positioning integrity monitoring capability, which includes the capability related to the manner supported by the user equipment for reporting the integrity related information. The capability related to the manner supported by the user equipment for reporting the integrity related information includes one or more of the following:
whether periodic reporting is supported;
whether event-triggered reporting is supported; or,
whether on-demand reporting is supported.

The user equipment may report the manner in which it can provide integrity-related monitoring information, such as periodic reporting, event-triggered reporting, or on-demand reporting, etc. In a case that the user equipment supports periodic reporting, the LMF may configure a reporting cycle based on the information reported by the user equipment, so that the user equipment reports once in each cycle; in a case that the user equipment supports event-triggered reporting, it may be configured by the LMF that: reporting is triggered when the user equipment determines that a certain event has occurred; in a case that the user equipment supports on-demand reporting, it may be configured by the LMF that: the user equipment reports once based a request when the LMF requests the user equipment to report.

### 6. The positioning integrity monitoring capability includes capability information indicating whether UE-based and/or UE-assisted integrity monitoring mechanism is supported by the user equipment

The user equipment reports the positioning integrity monitoring capability, which includes the capability information indicating whether the LTE-based and/or UE-assisted integrity monitoring mechanism is supported by the user equipment.

The user equipment may report capability information indicating whether UE-based or UE-assisted integrity monitoring mechanism is supported, or the user equipment may report that it supports both of the above manners. The LMF may process accordingly based on the requirement for the current positioning integrity. For example, it is assumed that UE-assisted positioning integrity monitoring reporting is currently required, the LMF selects user equipments that support the UE-assisted integrity monitoring mechanism to collect integrity information. In this case, these user equipments need to report, to the LMF, error situations of downlink signals that they can monitor and error situations caused internally. The LMF uses the error situations reported by these user equipments to generate positioning integrity parameters, such as an error range and an error variance of a certain measurement, etc., and then provides these generated positioning integrity parameters to other positioning user equipments for use. For another example, it is assumed that the UE-based integrity monitoring mechanism is currently required, the LMF selects user equipments that support the UE-based integrity monitoring mechanism, and these user equipments generate integrity parameters based on monitoring of errors of downlink signals and error situations caused internally, such as an error range and an error variance of a certain measurement, and then report these integrity parameters to the LMF. The LMF provides these integrity parameters to other positioning user equipments for use.

In the above manners, in a case that positioning integrity monitoring capability reported by each user equipment includes multiple pieces of information, then LMF may select a user equipment based on the multiple information reported by the each user equipment and a selection strategy. The selection strategy may be set based on needs.

Optionally, in the above process, the user equipment may report the positioning integrity monitoring capability in response to a request of the LMF.

It can be seen from the above embodiments that, in the embodiments of the present disclosure, the user equipment supports integrity monitoring capability and capability concerning monitoring performance; the LMF can use these pieces of capability information to more optimally select an appropriate and more reliable user equipment for integrity monitoring, to avoid a decrease in credibility of the integrity mechanism and ensure credibility of positioning results.

The technical solutions in the embodiments of the present disclosure may be applied to various systems, especially 5^{th} generation (5^{th} generation, 5G) systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (5G New Radio, 5GNR) system, etc. These systems each include a terminal and a network device. The system may also include a core network part, such as an evolved packet system (Evolved Packet System, EPS), a 5G system (5G system, SGS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

As shown in FIG. 4, an information processing device is provided according to the embodiments of the present disclosure, which is applied to a user equipment, and includes:
a processor 400, configured to read a program in a memory 420 to perform the following process:
reporting first information to an LMF, where the first information is used to indicate a positioning integrity monitoring capability of the user equipment; and
receiving second information transmitted by the LMF, where the second information is transmitted by the LMF in response to the first information and is used to indicate configuration information for positioning integrity monitoring; and
a transceiver 410, configured to receive and transmit data under control of the processor 400.

In FIG. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. For different user equipments, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

The processor 400 may be a Central Processing Unit (Central Processing Unit, CPU), an Application Specific Integrated Circuit (Application Specific Integrated Circuit, ASIC), a Field-Programmable Gate Array (Field-Programmable Gate Array, FPGA), or a Complex Programmable Logic Device (Complex Programmable Logic Device, CPLD), or the processor may adopt a multi-core architecture.

The processor is configured to execute any of the methods in the embodiments of the present application according to obtained executable instructions by calling the computer program stored in the memory. The processor and the memory may be physically arranged separately.

The processor 400 is further configured to read the program to perform the following steps:
receiving a first request from the LMF; and
reporting the first information to the LMF in response to the first request.

The processor 400 is further configured to read the program to perform the following step:
performing the positioning integrity monitoring based on the second information.

For content and meaning of the positioning integrity monitoring capability, reference may be made to the description of the above embodiments.

It should be noted that the device according to the embodiments of the present disclosure can implement all the method steps implemented by the user equipment in the above method embodiments, and the same technical effects can be realized. The same parts of the present embodiments as the method embodiments, and the beneficial effects, are not further provided herein.

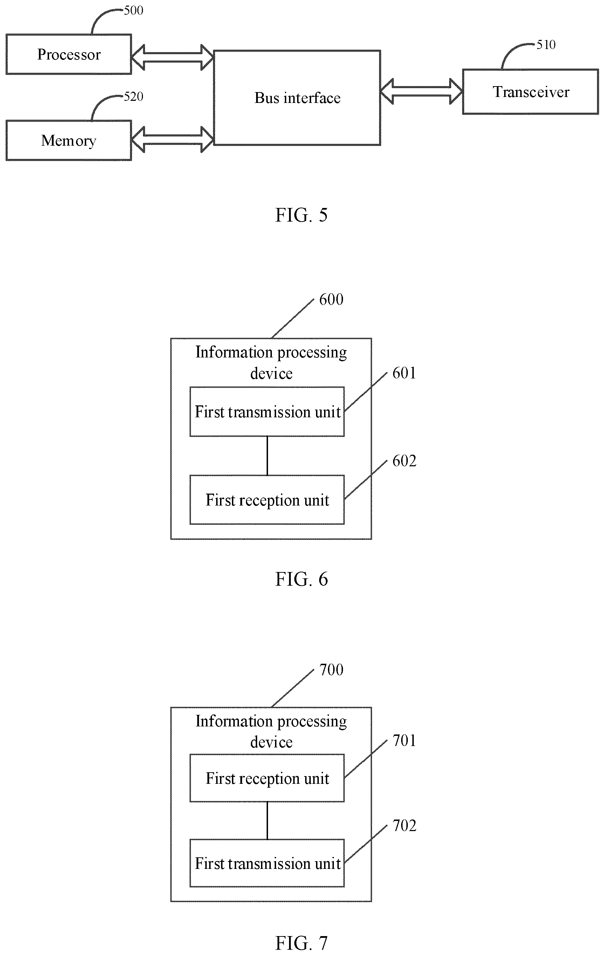

As shown in FIG. 5, an information processing device is provided according to the embodiments of the present disclosure, which is applied to an LMF, and includes:
a processor 500, configured to read a program in a memory 520 to perform the following process:
receiving first information reported by a user equipment, where the first information is used to indicate a positioning integrity of the user equipment; and
transmitting second information to the user equipment in response to the first information, where the second information is used to indicate configuration information for positioning integrity monitoring; and
a transceiver 510, configured to receive and transmit data under control of the processor 500.

In FIG. 5, a bus architecture may include any quantity of interconnected buses and bridges. Various circuits including one or more processors represented by the processor 500 and a memory represented by the memory 520 are linked. The bus architecture may further link various other circuits together, such as a periphery component, a voltage stabilizer and a power management circuit, which are known in the art and are not further described herein. A bus interface provides an interface. The transceiver 510 may be multiple elements, i.e., including a transmitter and a receiver, providing a unit for communicating with various other devices on transmission media. The processor 500 is in charge of managing the bus architecture and common processes. The memory 520 may store data used by the processor 500 in performing operations.

The processor 500 may be a Central Processing Unit (Central Processing Unit, CPU), an Application Specific Integrated Circuit (Application Specific Integrated Circuit, ASIC), a Field-Programmable Gate Array (Field-Programmable Gate Array, FPGA), or a Complex Programmable Logic Device (Complex Programmable Logic Device, CPLD), or the processor may adopt a multi-core architecture.

The processor 500 is in charge of managing the bus architecture and common processes. The memory 520 may store data used by the processor 500 in performing operations.

The processor 500 is further configured to read the program to perform the following steps:
transmitting a first request to the user equipment;
receiving the first information reported by the user equipment in response to the first request.

For content and meaning of the positioning integrity monitoring capability, reference may be made to the description of the above embodiments.

It should be noted that the device according to the embodiments of the present disclosure can implement all the method steps implemented by the LMF in the above method embodiments, and the same technical effects can be realized. The same parts of the present embodiments as the method embodiments, and the beneficial effects, are not further provided herein.

As shown in FIG. 6, an information processing device 600 is provided according to embodiments of the present disclosure, which is applied to a user equipment, and includes:
a first transmission unit 601, configured to report first information to an LMF, where the first information is used to indicate a positioning integrity monitoring capability of the user equipment; and a first reception unit 602, configured to receive second information transmitted by the LMF, where the second information is transmitted by the LMF in response to the first information and is used to indicate configuration information for positioning integrity monitoring.

For content and meaning of the positioning integrity monitoring capability, reference may be made to the description of the above embodiments.

Optionally, the device may further include:
a second reception unit, configured to receive a first request from the LMF;
the first transmission unit is configured to report the first information to the LMF in response to the first request.

Optionally, the device may further include:
a processing unit, configured to perform the positioning integrity monitoring based on the second information.

It should be noted that the device according to the embodiments of the present disclosure can implement all the method steps implemented by the user equipment in the above method embodiments, and the same technical effects can be realized. The same parts of the present embodiments as the method embodiments, and the beneficial effects, are not repeated herein.

As shown in FIG. 7, an information processing device 700 is provided according to embodiments of the present disclosure, which is applied to an LMF, and includes:
a first reception unit 701, configured to receive first information reported by a user equipment, where the first information is used to indicate a positioning integrity monitoring capability of the user equipment; and a first transmission unit 702, configured to transmit second information to the user equipment in response to the first information, where the second information is used to indicate configuration information for positioning integrity monitoring.

For content and meaning of the positioning integrity monitoring capability, reference may be made to the description of the above embodiments.

Optionally, the device may further include:
a second transmission unit, configured to transmit, via the LMF, a first request to the user equipment;
the first reception unit is configured to receive the first information reported by the user equipment in response to the first request.

It should be noted that the device according to the embodiments of the present disclosure can implement all the method steps implemented by the LMF in the above method embodiments, and the same technical effects can be realized. The same parts of the present embodiments as the method embodiments, and the beneficial effects, are not repeated herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the readable storage medium stores a program, and the program, when being execute by a processor, performs various processes in the embodiments of the information processing method described above, and same technical effects can be achieved, the repetition of which is not further provided herein. The readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital video disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk (SSD)).

It should be noted that the terms such as "having" and "including" or any other variants thereof, are intended to cover a non-exclusive inclusion, such that a process, method, article, or apparatus that includes a list of elements not only include those elements but may also include other elements that are not expressly listed or that are inherent to such process, method, article, or apparatus. Without more constraints, an element defined by the phrase "including a ..." does not preclude the existence of additional same elements in the process, method, article, or apparatus that includes the element.

From the above description of the embodiments, it will be clear to a person skilled in the art that the method of the above embodiments may be implemented by means of software plus common hardware platform as needed, or by means of hardware. With such an understanding, the essence the technical solutions of the present disclosure or the part contributing to the conventional technologies may be embodied in the form of a software product, and the computer software product is stored in a storage medium (e.g. ROM/RAM, magnetic disk, optical disk) including instructions to enable a user equipment (which may be a cell phone, a computer, a server, an air conditioner or a network device) to perform the methods described in the various embodiments of the present disclosure.

The embodiments of the present disclosure are described in the above with reference to the drawings, and the present disclosure is not limited to the above specific implementations. The above specific implementations are illustrative rather than restrictive. Various forms can be made by those of ordinary skill in the art under the inspiration of the present disclosure, without departing from the purpose of the present disclosure and the protection scope of the claims, all of which fall within the protection of the present disclosure.

## Claims

1. An information processing method, comprising:
reporting, by a user equipment, first information to a location management function (LMF), wherein the first information is used to indicate a positioning integrity monitoring capability of the user equipment; and
receiving, by the user equipment, second information transmitted by the LMF, wherein the second information is transmitted by the LMF in response to the first information and is used to indicate configuration information for positioning integrity monitoring.

2. The information processing method according to claim 1, wherein the positioning integrity monitoring capability comprises one or more of:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

3. The information processing method according to claim 2, wherein the capability to monitor the downlink signal error comprises one or more of:
whether a capability to monitor a reception (Rx) timing error is possessed;
whether a capability to monitor an Rx timing error group is possessed;
the maximum quantity of Rx timing error groups supported to be monitored;
a supported error resolution; or,
whether a capability to monitor a non-line of sight (NLOS) path is supported.

4. The information processing method according to claim 2, wherein the capability to monitor the performance of the downlink signal error comprises one or more of:
monitoring an uncertainty range of the downlink signal error; or,
an effective time interval for monitoring the downlink signal error.

5. The information processing method according to claim 2, wherein the capability to monitor the error caused by the signal transmitted within the user equipment comprises one or more of:
whether a capability to monitor a transmission (Tx) timing error is possessed;
whether a capability to monitor a Tx timing error group is possessed;
the maximum quantity of Tx timing error groups supported to be monitored;
a supported error resolution; or,
whether a capability to monitor an error in transmitting a sounding reference signal (SRS) is possessed.

6. The information processing method according to claim 2, wherein the capability to monitor the performance of the error caused by the signal transmitted within the user equipment comprises one or more of:
monitoring an uncertainty range of the error caused by the signal transmitted within the user equipment; or,
an effective time interval for monitoring the error caused by the signal transmitted within the user equipment.

7. The information processing method according to claim 2, wherein the capability concerning the supported manner for reporting the integrity related information comprises one or more of:
whether periodic reporting is supported;
whether event-triggered reporting is supported; or,
whether on-demand reporting is supported.

8. The information processing method according to claim 1, further comprising:
performing, by the user equipment, the positioning integrity monitoring based on the second information.

9. An information processing method, comprising:
receiving, by a location management function (LMF), first information reported by a user equipment, wherein the first information is used to indicate a positioning integrity monitoring capability of the user equipment; and
transmitting, by the LMF, second information to the user equipment in response to the first information, wherein the second information is used to indicate configuration information for positioning integrity monitoring.

10. The information processing method according to claim 9, wherein before the receiving, by the LMF, the first information reported by the user equipment, the method further comprises:
transmitting, by the LMF, a first request to the user equipment;
wherein the receiving, by the LMF, the first information reported by the user equipment comprises:
receiving, by the LMF, the first information reported by the user equipment in response to the first request.

11. The information processing method according to claim 9, wherein the positioning integrity monitoring capability comprises one or more of:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

12. The information processing method according to claim 11, wherein the capability to monitor the downlink signal error comprises one or more of:
whether a capability to monitor a reception (Rx) timing error is possessed;
whether a capability to monitor an Rx timing error group is possessed;
the maximum quantity of Rx timing error groups supported to be monitored;
a supported error resolution; or,
whether a capability to monitor a non-line of sight (NLOS) path is supported.

13. The information processing method according to claim 11, wherein the capability to monitor the performance of the downlink signal error comprises one or more of:
monitoring an uncertainty range of the downlink signal error; or,
an effective time interval for monitoring the downlink signal error.

14. The information processing method according to claim 11, wherein the capability to monitor the error caused by the signal transmitted within the user equipment comprises one or more of:
whether a capability to monitor a transmission (Tx) timing error is possessed;
whether a capability to monitor a Tx timing error group is possessed;
the maximum quantity of Tx timing error groups supported to be monitored;
a supported error resolution; or,
whether a capability to monitor an error in transmitting a sounding reference signal (SRS) is possessed.

15. The information processing method according to claim 11, wherein the capability to monitor the performance of the error caused by the signal transmitted within the user equipment comprises one or more of:
monitoring an uncertainty range of the error caused by the signal transmitted within the user equipment; or,
an effective time interval for monitoring the error caused by the signal transmitted within the user equipment.

16. The information processing method according to claim 11, wherein the capability concerning the supported manner for reporting the integrity related information comprises one or more of:
whether periodic reporting is supported;
whether event-triggered reporting is supported; or,
whether on-demand reporting is supported.

17. An information processing device, applied to a user equipment, comprising: a memory, a transceiver, and a processor;
wherein the memory is configured to store a computer program, the transceiver is configured to transmit and receive data under control of the processor, and the processor is configured to read the computer program in the memory to perform following operations:
reporting first information to a location management function (LMF), wherein the first information is used to indicate a positioning integrity monitoring capability of the user equipment; and
receiving second information transmitted by the LMF, wherein the second information is transmitted by the LMF in response to the first information and is used to indicate configuration information for positioning integrity monitoring.

18. The information processing device according to claim 17, wherein the positioning integrity monitoring capability comprises one or more of:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

19. The information processing device according to claim 17, wherein the processor is further configured to read the computer program in the memory to perform following operation:
performing the positioning integrity monitoring based on the second information.

20. An information processing device, applied to a location management function (LMF), comprising: a memory, a transceiver, and a processor;
wherein the memory is configured to store a computer program, the transceiver is configured to transmit and receive data under control of the processor, and the processor is configured to read the computer program in the memory to perform following operations:
receiving first information reported by a user equipment, wherein the first information is used to indicate a positioning integrity of the user equipment; and
transmitting second information to the user equipment in response to the first information, wherein the second information is used to indicate configuration information for positioning integrity monitoring.

21. The information processing device according to claim 20, wherein the positioning integrity monitoring capability comprises one or more of:
a capability to monitor a downlink signal error;
a capability to monitor a performance of a downlink signal error;
a capability to monitor an error caused by a signal transmitted within the user equipment;
a capability to monitor a performance of an error caused by a signal transmitted within the user equipment;
a capability concerning a supported manner for reporting integrity related information; or,
capability information indicating whether UE-based and/or UE-assisted integrity monitoring mechanism is supported.

22. The information processing device according to claim 20, wherein the processor is further configured to read the computer program in the memory to perform following operations:
transmitting a first request to the user equipment; and
receiving the first information reported by the user equipment in response to the first request.

23. An information processing device, applied to a user equipment, comprising:
a first transmission unit, configured to report first information to a location management function (LMF), wherein the first information is used to indicate a positioning integrity monitoring capability of the user equipment; and
a first reception unit, configured to receive second information transmitted by the LMF, wherein the second information is transmitted by the LMF in response to the first information and is used to indicate configuration information for positioning integrity monitoring.

24. An information processing device, applied to a location management function (LMF), comprising:
a first reception unit, configured to receive first information reported by a user equipment, wherein the first information is used to indicate a positioning integrity monitoring capability of the user equipment; and
a first transmission unit, configured to transmit second information to the user equipment in response to the first information, wherein the second information is used to indicate configuration information for positioning integrity monitoring.

25. A processor readable storage medium, having a computer program stored thereon, wherein the computer program is configured to cause a processor to perform the method according to any one of claims 1 to 16.
